# EUROPEAN PATENT APPLICATION

(11) **EP 4 836 356 A2**
(43) Date of publication of application: **04.11.2026**
(21) Application number: 26179974.6
(22) Date of filing: 20.05.2026
(51) Int. Cl.: H04L 9/40, G06F 21/64

(54) **SOVEREIGN FACILITY COMPUTING SYSTEM WITH HARDWARE-ROOTED AUDIT PROOF**

(30) Priority: 23.04.2026 EP 26174157; 16.05.2026 EP 26179081
(71) Applicant: Auvélisse Lda, 2830-247 Barreiro, Setúbal (PT)
(72) Inventor: Habboubi, Ahmed, 2830-247 Barreiro (PT)
(74) Representative: Gata-Goncalves, Ligia

(57) **Abstract**

The present invention relates to an IT/AI system with designed software, which is installed in a given facility and takes complete sovereign control of the facility's operations, data, security, physical devices, and AI decisions without depending on any internet connection or remote server or cloud server.

The system comprises 9 functional subsystems having different purposes and interact with corresponding hardware to perform the above-mentioned tasks.

By executing all the above several tasks locally, the present invention overcomes internet dependency, unverifiable AI accountability, data sovereignty loss and physical security barriers.

The present invention is in the area of IT/AI and management and is applicable to several sectors and industries management, such as in hospitals, healthcare units, financial services, military and governmental services, industrial production and manufacturing units.

## Description

### Technical field

The present invention relates to an IT/AI computer system with designed software, which may be installed in a given facility or building and takes complete sovereign control of the facility's operations, data, security, physical devices, and AI decisions without depending on any internet connection or remote server or cloud server.

### Prior art

Facility operations including hotels, hospitals, financial institutions, manufacturing plants, and government buildings currently rely on cloud-based software platforms for day-to-day management. In the hospitality sector, for example, a typical facility may operate five to eight independent cloud-based systems simultaneously: a property management system (such as Oracle OPERA Cloud, Mews, or Cloudbeds), a revenue management system (such as Duetto), a channel distribution platform (such as SiteMinder), a point-of-sale system, a building management system, and separate platforms for guest communications, staff coordination, and access control.

Each system stores data on separate cloud servers controlled by different vendors. In healthcare, systems such as Epic and Cerner may manage patient records. In financial services, credit decision engines and core banking platforms operate on vendor-controlled cloud infrastructure. These systems share a common architecture: the software runs on remote servers controlled by the vendor, and the facility accesses it through an internet connection. All operational data, including personal data, is stored on the vendor's servers.

Several problems are typically associated to these architectures, which cannot be resolved through software updates, as they are inherent to the centralized model:
First, the facility depends entirely on internet connectivity. When the connection is lost, operations stop. Field experience in hospitality confirms annual wide-area network outages of 3 to 8 hours.

Second, audit logs of operational and AI-driven decisions are stored in databases controlled by the vendor. The vendor can modify these logs. The facility operator has no independent way to prove the logs have not been altered. This is particularly problematic because Regulation (EU) 2024/1689 (the EU Artificial Intelligence Act), Article 12, requires deployers of high-risk AI systems to maintain tamper-evident decision logs, with enforcement beginning on 2 August 2026 and penalties of up to €35 million or 7% of global annual turnover.

Third, personal data leaves the facility and resides on the vendor's servers. Regulation (EU) 2016/679 (GDPR), Article 17, requires provable data erasure, but cloud vendors usually cannot prove that data has been completely removed from all copies across their distributed infrastructure.

Fourth, the vendor can remotely push software updates, access operational data, or change system behaviour. The facility operator has no physical mechanism to prevent this. Directive (EU) 2022/2555 (NIS2) imposes cybersecurity obligations on operators of essential services, but existing systems place the security infrastructure under the vendor's control rather than the operator's.

Furthermore, the current landscape of AI-driven facility management is fragmented: a single facility may use AI components from multiple independent vendors for pricing, staffing, energy management, and predictive maintenance, each storing its own decision logs on separate cloud platforms. No unified, tamper-evident record of AI-assisted decisions exists across these systems, making consolidated compliance with the EU AI Act practically impossible without architectural change.

Additionally, existing systems rely on classical cryptographic algorithms (RSA, ECC) that are expected to become vulnerable to quantum computing attacks within the operational lifetime of currently deployed infrastructure. The US National Institute of Standards and Technology (NIST) has standardized post-quantum replacement algorithms (FIPS 203, 204, 205) and has announced deprecation of classical algorithms for federal use. Systems without built-in cryptographic agility will require fundamental re-architecture.

These problems are inherent to the centralized cloud architecture and cannot be resolved through software patches or contractual arrangements. They require a structural change in which the facility itself not a remote vendor - holds sovereign control over operations, data, security proofs, and physical device management.

### General Description

The computer system of the invention may be able to execute simultaneously the following tasks: 1) Runs all operations locally, 2) Securely accepts external data through a multi-layered checkpoint, 3) Rejects unauthorized software updates using tamper-proof hardware, 4) Records every action in an unalterable log with blockchain proof, 5) Prevents even the solution provider from accessing facility data enforced by both software and hardware, 6) Controls physical devices and autonomous robots without internet, 7) Logs every AI decision with hardware-signed proof, 8) Automatically destroys expired data and proves it, and 9) Verifies its own integrity on first boot and supports quantum-resistant security.

### Description of the figures

To facilitate understanding of the system architecture and the interaction between its functional components, the following figures are provided. These figures illustrate the architecture and data flows of the system of the present invention.

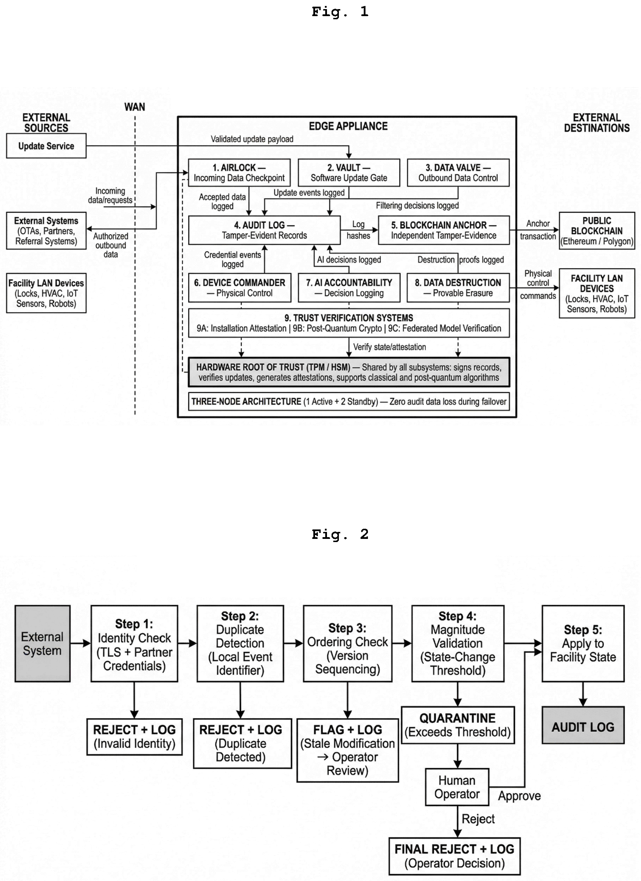

**Fig. 1** represents an overview of an embodiment of the computer system architecture of the present invention. The figure shows an edge appliance comprising nine functional subsystems organized in four layers: boundary subsystems that handle incoming and outgoing data, corresponding to subsystems **1-3;** a core audit subsystem corresponding to a subsystem **4** and an anchoring infrastructure subsystem corresponding to a subsystem **5,** the operational subsystems that control devices and log AI decisions, corresponding to subsystems **6-8and** the trust verification layer corresponding to a subsystem **9.** The shared hardware root of trust and the three-node redundancy architecture are shown as the foundation of the system. External connections to the wide-area network, the public blockchain, and facility LAN devices are indicated.
**Fig. 2** represents an embodiment of a data flow through an Airlock ingestion engine, corresponding to the subsystem **1.** The figure shows five sequential validation steps, designated as identity check, duplicate detection, ordering check, magnitude validation, and application to facility state; rejection paths for messages failing the identity check step or duplicate detection step; a quarantine path for messages exceeding magnitude thresholds in the magnitude validation step; and a human operator review loop for quarantined messages. The outcomes may be recorded in the audit log.

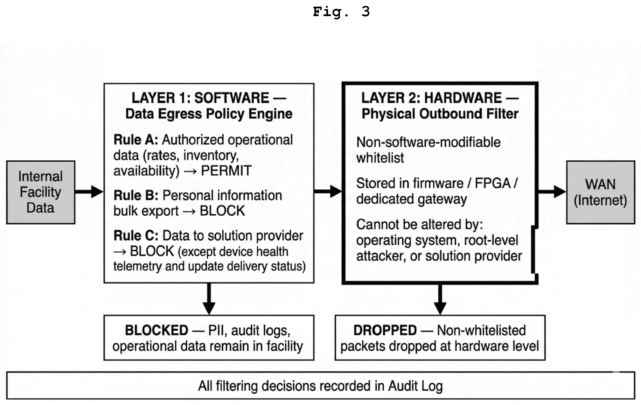

**Fig. 3** represents an embodiment of a dual-layer outbound data control architecture of the subsystem **3,** a Data Valve. The figure shows the two independent filtering layers: a first layer, designated as layer 1, comprising a software-based data egress policy engine which classifies outbound data according to three rules, namely: (a) authorized operational data such as rates, inventory, and availability data is permitted to be transmitted to distribution partners; (b) personal information is blocked from being exported in bulk; and (c) audit log contents and operational data are blocked from being transmitted to the solution provider, except for device health telemetry and update delivery status; and a second layer, designated as layer 2, comprising a hardware-enforced outbound filter which applies a non-software-modifiable whitelist. Data blocked by either layer and packets dropped at the hardware level are shown separately.

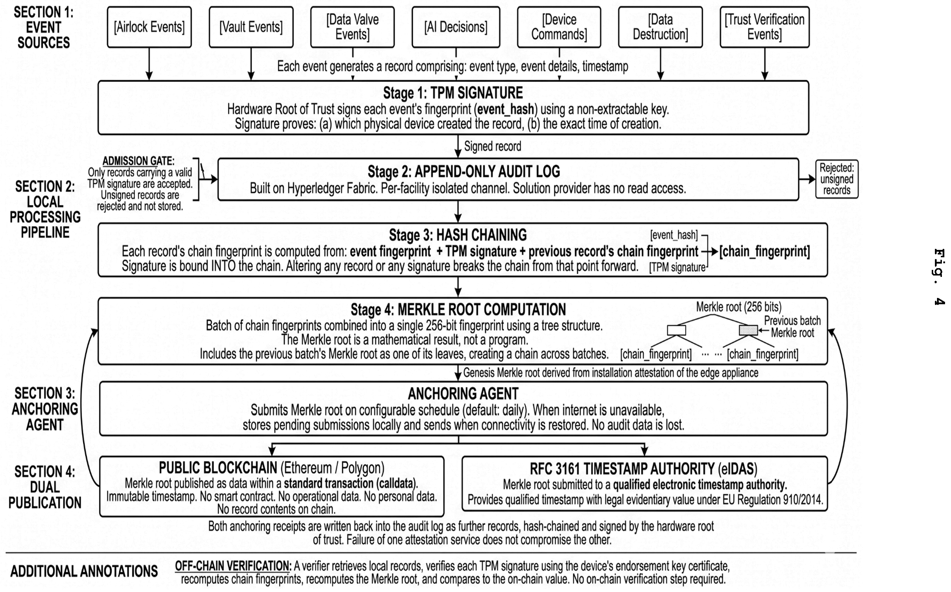

**Fig. 4** represents an embodiment of the audit log, i.e. the subsystem **4** and a blockchain anchoring pipeline comprised in the subsystem **5.** The figure shows a flow from seven categories of event sources, namely airlock events, vault events, data valve events, AI decisions, device commands, data destruction events, and trust verification events through a plurality of sequential processing stages comprising the following stages: cryptographic hash chaining, TPM signature, Merkle root computation, and submission to the public blockchain by the anchoring agent. The figure indicates that only the Merkle root, particularly a 256-bit mathematical fingerprint, is written to the blockchain, with no operational data or personal information transmitted.

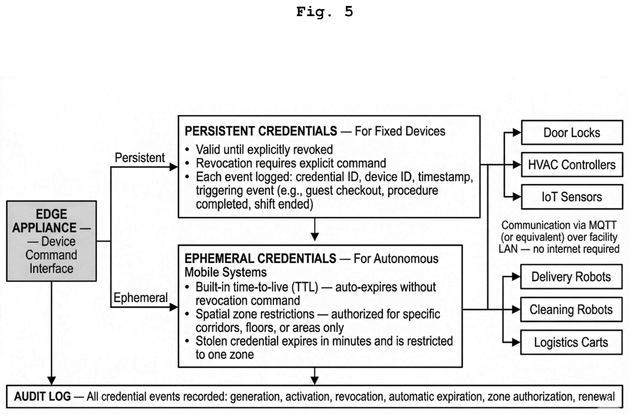

**Fig. 5** represents an embodiment of two types of access credentials generated by a device commander corresponding to the subsystem **6.** The figure shows a distinction between persistent credentials for fixed devices such as door locks, HVAC controllers, and IoT sensors, which remain valid until explicitly revoked and ephemeral credentials for autonomous mobile systems such as delivery robots, cleaning robots, and logistics carts, which have a built-in time-to-live parameter and spatial zone restrictions. Communication via MQTT over the facility LAN without internet dependency is indicated. All credential events are recorded in the audit log.

### Description of the invention

The present invention relates to an IT/AI system with designed software, which may be installed in a given facility and takes complete sovereign control of the facility's operations, data, security, physical devices, and AI decisions without depending on any internet connection or remote server or cloud server.

In an embodiment, the computer system is configured to maintain full operational capability without wide-area network connectivity. In particular, the following operations are carried out locally on the edge appliance without requiring an internet connection or a cloud server: execution of AI-assisted decisions by the AI system associated with the facility; generation, transmission, and revocation of access credentials by the device commander; issuance of operational commands to physical devices via the local area network; recording of all events in the append-only audit log with cryptographic hash chaining; and signing of audit records by the hardware root of trust. When wide-area network connectivity is unavailable, the anchoring agent stores pending Merkle root submissions locally and transmits them to the public blockchain when connectivity is restored, such that no audit data is lost during the period of unavailability.

In an embodiment, the hardware root of trust and the AI system that generates the decision or recommendation are co-located on the same edge appliance within the facility. The cryptographic signature over the AI decision audit record is generated by the hardware root of trust on the same edge appliance on which the AI decision was executed, without any network transmission between the execution of the AI decision and the signing of the corresponding AI decision audit record. This co-location ensures that there is no temporal or spatial gap in which the AI decision audit record could be intercepted, altered, or lost before being cryptographically bound to the hardware root of trust. By contrast, in a cloud-based architecture, the AI decision may be executed at the facility, but the corresponding record must be transmitted over a wide-area network to a remote server before it is recorded or signed, creating a gap during which the record is vulnerable to interception or alteration.

In an embodiment, the append-only audit log is configured to accept only audit records that carry a valid cryptographic signature from the hardware root of trust. Records that do not carry a valid signature are rejected at the point of entry to the audit log and are not stored. In this manner, every record stored in the audit log has been signed by the hardware root of trust of the edge appliance before being admitted to the log.

In an embodiment, each record stored in the audit log comprises at least an event fingerprint, a cryptographic signature of the hardware root of trust over said event fingerprint, and a chain fingerprint computed from said event fingerprint, said cryptographic signature, and the chain fingerprint of the preceding record. In this manner, the cryptographic signature of the hardware root of trust is bound into the hash chain, such that alteration of any signature changes the chain fingerprint of the corresponding record and all subsequent records.

In an embodiment, the Merkle root computed by the anchoring agent over a batch of audit records is published as data within a transaction on the public blockchain. The public blockchain stores said transaction, including the Merkle root, with an immutable timestamp. The public blockchain serves as a publicly verifiable notary providing an immutable, timestamped commitment to the value of the Merkle root at the time of publication. No operational data, personal data, or record contents are included in the transaction.

In an embodiment, a verifier seeking to confirm the integrity of the audit records may carry out the following steps: retrieving the audit records from the local audit log; verifying the cryptographic signature of the hardware root of trust on each individual audit record using the public key from the device's endorsement key certificate; recomputing the chain fingerprints to verify hash chain continuity; recomputing the Merkle root from the chain fingerprints of the retrieved audit records; and comparing the recomputed Merkle root with the value published in the corresponding transaction on the public blockchain. If the recomputed Merkle root matches the on-chain value and all individual record signatures are valid, the audit records are confirmed as untampered since the time of the corresponding blockchain publication.

In this manner, on-chain publication provides an irrefutable time-bound commitment to the batch state, while the cryptographic detail of per-event signatures and hash chain integrity is verified off-chain using standard verification procedures and the public key material of the hardware root of trust, without requiring the verifier to trust the solution provider or the facility operator.

In an embodiment, the tamper-evidence of the computer system is provided by three independent and complementary mechanisms. A first mechanism comprises signing of each audit record by the hardware root of trust, providing real-time cryptographic binding between each event and the edge appliance that generated it. A second mechanism comprises anchoring of a Merkle root to a public blockchain, providing historical immutability: once a Merkle root has been submitted to the public blockchain, the corresponding batch of audit records cannot be retroactively altered, even in the event that the signing key of the hardware root of trust is subsequently compromised. A third mechanism comprises the physical security of the edge appliance, including installation of the edge appliance in a physically secured location within the facility with access controls preventing unauthorized physical access to the hardware root of trust. The failure or compromise of any single mechanism does not compromise the tamper-evidence provided by the remaining mechanisms.

In an embodiment, the edge appliance is installed in a physically secured location within the facility, such as a locked cabinet, a server rack, or a dedicated equipment room, with documented physical access controls. In an embodiment, the edge appliance further comprises tamper-evident seals and a chassis intrusion detection mechanism configured to generate an alert and a corresponding record in the audit log upon detection of unauthorized physical access to the edge appliance.

### Preferred embodiments of the invention

### I. The system of the present invention.

The system of the present invention relates to a computer system comprising one or more computer subsystems installed within a facility and configured to execute computer operations locally, without depending on a cloud server or internet connection. In an embodiment, the computer system may perform several tasks simultaneously.

In one aspect, all operational software may be executed locally on an appliance installed within a given facility or a building as part of a local installation, such that all relevant data remains within said local installation. The appliance constitutes the authoritative source of truth, rather than a cloud server.

In another aspect, external data may be securely accepted through a multi-layered checkpoint. Incoming messages from external systems or subsystems, such as booking platforms, channel managers, financial networks, and hospital referral systems, must pass through an "airlock" configured to verify an identity, prevent duplicates, check message ordering, and validate that proposed changes are within normal bounds before allowing that the incoming messages from the external systems or subsystems to affect a facility state.

In an embodiment, each software update requires a digital signature. Therefore, unauthorized software updates may be rejected by means of a tamper-proof hardware. The digital signature must be verified using a key locked inside a physical security chip inaccessible to software, i.e., that no software can read. The verification must be carried out inside a sealed processor zone. Unsigned or tampered updates must be rejected.

In an embodiment, each action must be recorded in an unalterable log with blockchain proof, such that each accepted input, rejected input, applied update, AI decision, data destruction event, device command, and credential event must be recorded in an append-only, hash-chained audit log.

In an embodiment, each record may optionally be assigned a unique random nonce before fingerprinting. Daily or regularly summary fingerprint, such as a Merkle root, may be written to a public blockchain, creating a permanent, an independent, and a tamper-evident proof.

In an embodiment, access to a facility data may be prevented, even for a solution provider, from accessing facility data enforced by both software and hardware. In an embodiment, the software is configured to classify outbound data and block unauthorized transmission. Additionally, a physical hardware filter provides a second layer that cannot be bypassed even by a fully compromised operating system of the physical computing device.

In an embodiment physical devices and autonomous robots may be controlled without internet access. The appliance is configured to generate, transmit, and revoke access credentials, such as digital keys, and to issues operational commands to locks, climate systems, sensors, and autonomous mobile robots via the local network. The robots receive short-lived credentials with zone restrictions, and events, including credential generation, credential activation, credential revocation, automatic credential expiry, zone authorization changes, and device command transmissions are recorded in the audit log.

In an embodiment, each AI decision is logged with hardware-signed proof, such that, when the AI determines a triage level, flags a suspicious transaction, or suggests a maintenance action, the computer system records exactly the model that was used, the input data, the output data, the confidence level of the AI decision, and a corresponding human response. The confidence level is a numerical value, preferably between 0 and 1, indicating the degree of certainty of the AI model in its output. For example, a value of 0.92 indicates high confidence, while a value of 0.51 indicates marginal confidence. This record may be cryptographically protected and blockchain-anchored.

In an embodiment, expired data may be automatically destroyed, and the destruction of said data may be proved. For this purpose, configurable retention policies, stored in a configuration database within an edge appliance and accessible to the data destruction engine (subsystem 8), may automatically delete data when the permitted data storage period expires. The retention policies may be configured by an authorized facility operator through a management interface and enforced automatically by the data destruction engine (subsystem 8). After the data has been destroyed, the computer system generates a mathematical proof that the data was removed, anchors that proof to the blockchain, and creates a permanent evidence trail that may be verified by a regulator.

The edge appliance refers to a physical computing device installed within the facility. It is a self-contained hardware unit comprising one or more computing nodes, a hardware root of trust chip (TPM), local storage, and network interfaces, configured to execute all operational software locally within the facility.

In an embodiment, the computer system is further configured to verify the integrity thereof upon first boot and may also be configured to support quantum-resistant security, such that, when a new appliance is installed, the computer system proves that the appliance has not been tampered with during shipping before operation is permitted. The computer system may support both current and post-quantum cryptographic algorithms, ensuring valid security through the lifetime of the device, for example 1o years or more.

An overview of an embodiment of a computer system architecture showing all the computer subsystems and their interactions is provided in **Fig. 1****.**

**Figure 1** shows an embodiment of a system architecture implemented as an edge appliance arranged between external sources and external destinations across a WAN.

The external sources shown on the left-side of the **Figure 1** comprise an update service; external systems, such as OTAs, partners and referral systems; and facility LAN devices, such as locks, HVAC systems, IoT sensors and robots.

The external destinations shown on the right-side of the **Figure 1** comprise a public blockchain, for example a Ethereum or Polygon; and facility LAN devices, such as locks, HVAC, IoT sensors and robots.

In the illustrated embodiment, incoming data and requests from the external systems are received through the Airlock **1,** which forms an incoming data checkpoint. Accepted data is logged to the Audit Log **4.** A validated update payload from the update service is supplied to the Vault **2,** which forms a software update gate, and update events are likewise logged to the Audit Log **4.**

Outbound data control is carried out by the Data Valve **3.**

Authorized outbound data may be transmitted from the edge appliance to the external systems. Filtering decisions produced by the Data Valve **3** are logged in the Audit Log **4.**

The Audit Log **4** provides log hashes to the Blockchain Anchor **5,** which generates an anchor transaction to a public blockchain so as to provide independent tamper-evidence.

The Audit Log **4** stores tamper-evident records and receives, in the illustrated embodiment, accepted data records from the Airlock 1, update events from the Vault **2,** credential events from the Device Commander **6,** AI decisions from the AI Accountability subsystem **7,** and destruction proofs from the Data Destruction subsystem **8.**

The Device Commander **6** provides physical control and transmits physical control commands to facility LAN devices.

The AI Accountability subsystem **7** performs decision logging.

The Data Destruction subsystem **8** performs provable erasure and supplies destruction proofs for logging.

The system further comprises Trust Verification Systems **9,** comprising installation attestation **9A,** post-quantum crypto **9B,** and federated model verification **9C.** As shown in the Figure **1****,** the Trust Verification Systems **9** carry out state and attestation verification in cooperation with a Hardware Root of Trust, such as a TPM or HSM, shared by all the subsystems and configured to sign records, verify updates, generate attestations, and support classical and post-quantum algorithms.

In the illustrated embodiment, the edge appliance further comprises a three-node architecture with one active node and two standby nodes, the nodes being configured such that zero audit data loss during failover is provided.

### II. Subsystems of the computer system of the present invention.

In an embodiment, the computer system comprises nine computer subsystems. Each computer subsystem is configured to carry out a specific task and shares two common elements with the other subsystems, namely a physical security chip configured to provide tamper-proof cryptographic operations, and a central audit log configured to record events generated by each computer subsystems.

### 1. The first computer subsystem of the invention

In an embodiment, the subsystem **1,** hereinafter referred to as the airlock, is configured as an incoming data security checkpoint for receiving legitimate incoming data from one or more external systems or subsystems, validating the incoming data, rejecting duplicate incoming data, detecting abnormal changes in the incoming data, and log all incoming data.

In an embodiment, the airlock is configured to carry out an identity check on each incoming message. The Airlock is configured to receive one or more incoming messages over an encrypted connection, preferably a transport layer security (TLS) connection, and to verify if a sender of the one or more incoming messages has valid partner credentials for the external system they claim to represent. If the sender cannot be verified, the one or more received incoming unverified messages are rejected and logged.

In an embodiment, the Airlock is further configured to carry out duplicate detection for each incoming message that has successfully passed the identity check. Duplicate detection is therefore carried out after the identity check, whereas messages that fail the identity check are rejected and logged before reaching the duplication detection step.

The airlock is configured to generate a unique fingerprint also referred as a local event identifier, for each incoming message, by combining: an identifier of a source system from which the incoming message originates; an external record ID or a transaction ID associated with the incoming message; and, optionally, a version number.

In an embodiment, the source system is the external system that sends the incoming message to the Airlock. Examples of source system identifiers include a channel identifier assigned to an online travel agency, such as "booking.com" or "expedia", a financial network identifier such as a SWIFT BIC code, a hospital referral system identifier, or an API key associated with a specific distribution partner.

In an embodiment, the external record is a data record maintained by the source system, for example a reservation record maintained by an online travel agency or a patient referral record maintained by a hospital information system. The external record is stored on the source system infrastructure rather than in the edge appliance. An external record ID, such as a reservation confirmation number assigned by the source system, may therefore be used as one component of the local event identifier generated by the Airlock for duplicate detection.

In an embodiment, the optional version number may be a sequential identifier assigned by the source system to successive modifications of the same record. For example, where a reservation is modified several times, each modification may carry a respective incrementing version number. The version number may enable the Airlock to determine the chronological order of modifications and to detect duplicate or stale messages.

In an embodiment, the generated fingerprint is compared with previously processed fingerprints stored in a persistent data store within the edge appliance an accessible to the Airlock subsystem. Each time an incoming message is processed and accepted; the corresponding fingerprint (local event identifier) is added to the persistent data store. When a new incoming message arrives, the airlock compares the generated fingerprint against this stored set to determine whether the message has already been processed. If the generated fingerprint matches a previously processed fingerprint, the incoming message is rejected as a duplicate and the rejection is logged.

In an embodiment, the Airlock is further configured to verify the order of the incoming messages. When multiple incoming messages relating to the same record arrive, for example after an internet outage when delayed messages arrive in a burst, the airlock is configured to use the version number included in the unique fingerprint of the respective incoming message to determine the correct order of the incoming messages. The airlock sorts the incoming messages according to their version numbers.

An incoming message having a higher version number than the version currently reflected in the facility state for the corresponding record is accepted and used to update the corresponding record in the facility state. For example, if version 3 of a reservation modification arrives while the facility state currently reflects version 2, the version 3 incoming message is accepted, and the facility state is updated accordingly.

Incoming messages having equal version numbers are suppressed as duplicates. Incoming messages having lower version numbers are flagged as stale modifications requiring operator review. Both categories constitute conflict outcomes and are recorded in the audit log, namely: suppression of incoming messages having equal version numbers as duplicates; and flagging of incoming messages having lower version numbers as stale modifications requiring operator review.

In an embodiment, the airlock subsystem is further configured to carry out a content reasonableness check of the incoming message, i.e., a state-change magnitude validation.

The facility state is the current operational data maintained by the edge appliance as the authoritative record of the facility's status. The facility state may comprise, depending on the end-user application, room availability and occupancy status, current pricing and rate plans, guest or patient records, staff schedules, device credentials and access permissions, equipment status, and inventory levels.

A change to the facility state occurs when an accepted incoming message causes one or more values in the facility state to be updated, for example, when a new reservation changes room availability, a rate update changes pricing, or a cancellation changes occupancy status.

After the incoming message passes the identity and duplicate checks, but before the incoming message is allowed to change the facility state, the airlock computes how much the incoming message would change the current facility state by computing a numerical difference between the value proposed by the incoming message and the corresponding current value in the facility state. For example, if the current room rate is 150€ and the incoming message proposes 0€, the absolute change is 150€ and the percentage change is 100%. This computed difference is then compared against a configurable threshold for the relevant data category. If the magnitude of the computed difference exceeds a configurable threshold for that data category, the message is quarantined meaning it is held in a pending state and not applied.

A quarantine alert is logged. A human operator must review and explicitly approve or reject the quarantined change. The operator's decision is logged.

In an embodiment, the thresholds are configurable per data category: pricing changes, inventory changes, access permission changes, schedule changes.

In an embodiment, the thresholds are also configurable per measurement type: absolute change, percentage change, rate of change over time. This may prevent a compromised external system from making catastrophic changes, as for example setting all prices to zero, even if the incoming message passes the identity check.

In an embodiment, if all checks pass, i.e., the entity check, the duplicate detection check, the version check, and the content reasonableness check, the incoming message is accepted and used to update the corresponding record in the facility state. The accepted message is recorded in the audit log.

An embodiment of a complete data flow of the airlock ingestion engine is illustrated in **Fig. 2****.**

**Figure 2** illustrates an embodiment of a data-ingestion flow implemented by an Airlock ingestion engine for processing data received from an external system before such data is permitted to affect a facility state.

In the illustrated embodiment, an input originating from an external system is supplied to the Airlock ingestion engine and is subjected to a plurality of sequential validation steps. More particularly, the input is processed through **Step 1,** namely an identity check; **Step 2,** namely duplicate detection; **Step 3,** namely an ordering check; **Step 4,** namely magnitude validation, and **Step 5,** namely application to the facility state.

In **Step 1,** the ingestion engine is configured to carry out an identity check on the received input. In the illustrated embodiment, the identity check is based on transport layer security, TLS, and partner credentials. The ingestion engine is configured to determine whether the source of the received input is authenticated and authorised. If the identity check fails, the input is rejected, and the rejection is recorded in the audit log, for example as an invalid identity event.

If the identity check is successful, the input proceeds to **Step 2,** in which duplicate detection is carried out. In the illustrated embodiment, duplicate detection is based on a local event identifier. In this step, the ingestion engine is configured to determine whether the received input corresponds to an event that has already been received or processed. If a duplicate is detected, the input is rejected, and the rejection is recorded in the audit log, for example as a duplicate-detected event.

If no duplicate is detected, the input proceeds to **Step 3,** in which an ordering check is carried out. In the illustrated embodiment, the ordering check is based on version sequencing.

In this step, the ingestion engine is configured to determine whether the received input is consistent with an expected temporal or logical sequence of events. If the received input is found to be stale, out of sequence, or otherwise inconsistent with the expected ordering, the input is flagged rather than directly applied, and the event is recorded in the audit log. In the illustrated embodiment, such an event may be treated as a stale modification requiring operator review.

If the ordering check is satisfied, the input proceeds to **Step 4,** in which magnitude validation is carried out.

In the illustrated embodiment, the ingestion engine is configured to determines whether a requested state change represented by the received input exceeds a state-change threshold. In this step, the ingestion engine is configured to assess whether a magnitude associated with the received input exceeds a predefined or configurable threshold applicable to the corresponding category of data, command or facility parameter.

If the magnitude does not exceed the threshold, the input is allowed to proceed to **Step 5** for application to the facility state. By contrast, if the magnitude exceeds the threshold, the input is quarantined. The quarantine event is recorded in the audit log, and a quarantined input is forwarded to a human operator for review.

In the illustrated embodiment, the human operator evaluates the quarantined input and to issue an approval decision or a rejection decision. If the human operator approves the quarantined input, the input is released and allowed to proceed to **Step 5** for application to the facility state. If the human operator rejects the quarantined input, a final rejection is issued, and the rejection is recorded in the audit log, for example as an operator decision.

In **Step 5,** the received input is applied to the facility state. In the illustrated embodiment, **Step 5** may be reached either directly from **Step 4,** when the magnitude validation is satisfied, or from the human-operator review path after approval of a quarantined input. The application of the input to the facility state is recorded in the audit log.

As further shown in **Figure 2****,** the audit log records outcomes arising throughout the Airlock ingestion flow. Such outcomes comprise, for example, rejection due to invalid identity, rejection due to duplicate detection, flagging of stale or out-of-sequence modifications, quarantine of inputs exceeding the threshold, human-operator approval or rejection decisions, and successful application to the facility state. In this manner, the audit log provides a traceable record of handling of the received inputs.

The embodiment of **Figure 2** provides a staged control mechanism in which inputs received from external systems are not applied directly to the facility state, but are instead subjected to successive validation operations, with exceptional cases being either rejected, flagged, or quarantined for human review, and with the resulting actions being recorded in the audit log.

### 2. The second computer subsystem of the invention

In an embodiment, the subsystem **2,** hereinafter referred as a vault is configured as a software update security gate to ensure that only authorized, untampered software updates can modify the system's code., wherein the system's code refers to the operational software executed on the physical computing device, such as the edge appliance, not being limited to the vault subsystem.

Each software update package may comprise a manifest listing version and components; a cryptographic fingerprint for each component; and a digital signature over the manifest created by the authorized issuer's signing key.

In an embodiment, the vault subsystem is configured to carry out the following steps: checking the digital signature before looking at any component; verifying if each component's fingerprint matches the signed manifest; and rejecting the entire software update package if either check fails.

In an embodiment, a verification key used to check the signature over the manifest included in the software update package is sealed inside a hardware root of a trust chip (TPM). In the context of the present disclosure, "sealed" means encrypted with a key that only this specific chip, i.e., the respective hardware root of the trust chip can decrypt. Even if someone physically copies the sealed key data to another device, it will not work on any other chip.

In an embodiment, a signature verification code is executed inside an isolated execution environment (TEE). This means that, even if an attacker has complete root access to the operating system running on the physical computing device, such as the edge appliance, and not firmware of the TPM chip. The TEE provides isolation such that, even if an attacker has complete root access to the operating system of the edge appliance, the attacker cannot observe or interfere with the verification process running inside the TEE, extract the key, or forge a valid signature.

In an embodiment, a successfully applied update is logged. If the update is rejected, the rejected update is logged with the reason for rejection.

### 3. The third computer subsystem of the invention

In an embodiment, the subsystem **3,** hereinafter referred as a data valve. The data valve comprises an
outbound data control software and a Hardware.

In an embodiment, the data valve is configured to prevent certain categories of data from leaving the facility, even if the software is compromised. The categories of data prevented from leaving the facility, depending on the end-user application, may include: (a) personal data relating to guests, patients, customers, or employees; (b) audit log records; (c) operational data, such as internal pricing strategies, staff schedules, and facility management records; and (d) AI model parameters and decision records.

The only data categories permitted for outbound transmission are authorized operational telemetry to distribution partners, such as rates, availability, and inventory status, and device health telemetry and update delivery status to the solution provider.

In an embodiment, the data valve comprises two layers:
A first Layer **1** corresponds to a software enforcement, i.e., a data egress policy engine. In an embodiment, all outbound communication passes through a software classification engine that enforces three rules: (a) authorized operational messages such as rates, inventory, availability, and reservation status, that can be transmitted to distribution partners; (b) personal information that cannot be bulk-exported; (c) audit log contents and operational data that cannot be sent to the solution provider. In an embodiment, the solution provider receives only a device health status and an update delivery confirmation.

A second Layer 2 corresponds to a hardware enforcement such as a hardware-enforced outbound data filter.

In an embodiment, a physical component separated from a main processing hardware is positioned between the edge appliance and an internet connection. The main processing hardware refers to the central processing unit/s) and associated memory of the edge appliance on which the operational software, including the operating system and the software-based data egress policy engine (Layer 1), is executed. The physical component comprises a whitelist of permitted outbound communication patterns for the solution provider, stored in a non-software-modifiable memory.

In an embodiment, any outbound packet destined for the solution provider that does not match the whitelist is dropped at the hardware level. This step works independently of the software layer. Even if an attacker gains complete control of the operating system and rewrites the software rules, the hardware filter may still block unauthorized data.

In an embodiment, the physical component may be implemented as a hardware outbound filter (layer 2) may be selected from a list comprising a dedicated network processing unit with firmware-level packet inspection; a field-programmable gate array (FPGA) with hardcoded filtering logic; a physically separate network gateway within the appliance enclosure.

Software-only data protection may be vulnerable to privilege escalation attacks, since an attacker obtaining root access may modify, disable, or otherwise circumvent software rules. Hardware enforcement, by contrast, provides an additional protection layer, i.e., a physical "barrier" that cannot be bypassed by any software exploit alone. Accordingly, the hardware layer cooperates with and reinforces the software protection mechanisms, ensuring that the imposed data access restrictions do not rely exclusively on software integrity or configuration. This dual-layer architecture ensures that the solution provide access to operational data is prevented by combined hardware enforcement and software protection mechanisms.

An embodiment of a dual-layer outbound control architecture according to the present disclosure is illustrated in **Fig. 3****.**

**Figure 3** shows an embodiment of a dual-layer outbound control arrangement, also referred to as a data valve, configured to control transmission of data from internal facility data sources to an external wide area network, WAN, such as the Internet.

As shown in **Figure 3****,** the software layer applies a plurality of rules to different categories of data. In the illustrated example, authorized operational data, such as rates, inventory and availability data, is permitted. Bulk export of personal information is blocked. Transmission of data to a solution provider is blocked, except for device health telemetry and update delivery status.

In the illustrated embodiment, internal facility data is provided at the left-hand side of the figure and is supplied along an outbound path to a first layer implemented as a software data egress policy engine. The first layer is configured to inspect a received internal facility data and apply policy rules in order to determine whether respective data is permitted for onward transmission or blocked from leaving the facility.

Data that is not authorized by the first layer is not forwarded downstream, but instead remains within the facility. As indicated in the figure, blocked data may comprise personally identifiable information (PII), audit logs, and operational data remaining in the facility. Data permitted by the software layer is forwarded sequentially to a second layer implemented as a hardware-based physical outbound filter. The second layer is thus arranged downstream of the first layer and acts on data already allowed by the software data egress policy engine.

In the embodiment shown, the hardware layer enforces a non-software-modifiable whitelist. As indicated in the figure, the whitelist may be stored in a firmware, in an FPGA, or in a dedicated gateway, such that modification of the whitelist by the operating system, by a root-level attacker, or by a solution provider is prevented.

The hardware layer is configured to allow only whitelisted outbound packets to pass towards the WAN. Non-whitelisted packets are dropped at hardware level, thereby providing a further outbound control barrier independent from the software-layer policy engine.

**Figure 3** further shows that all filtering decisions are recorded in an audit log. The embodiment therefore provides sequential software-level and hardware-level outbound control, such that only data satisfying both the software policy rules and the hardware-enforced whitelist is allowed to leave the facility, while other data is either blocked and retained locally or dropped at hardware level.

### 4. The fourth computer subsystem of the invention

In an embodiment, the subsystem **4,** hereinafter referred as an audit log configured as a tamper-evident record-keeping to create a permanent, unalterable record of every action, decision, and event with a mathematical proof that nothing has been changed after the fact.

In an embodiment, the computer system is implemented as an edge appliance comprising a plurality of subsystems, such that each action performed by any subsystem of the edge appliance, for example the airlock, vault, data valve, device commander, AI accountability engine, or data destruction engine, generates a corresponding record in the append-only audit log maintained by Subsystem **4,** namely the audit log subsystem. Such actions may include accepted messages, rejected messages, applied updates, rejected updates, AI decisions, data destruction events, device commands, credential events, quarantine alerts, and operator authorizations.

In an embodiment, additional protection against low-entropy record analysis may be provided by a step of generating a cryptographic nonce, namely a unique random number produced by the hardware root of trust and combining said nonce with each record before hashing.

The hardware root of trust chip may comprise an internal hardware random number generator conforming to the TPM 2.0 specification. When a nonce is generated, the internal hardware random number generator of the hardware root of trust chip produces a random value having a predetermined bit length, for example 256 bits.

The generated nonce may be concatenated with the record data, such as event type, event details, and timestamp, prior to application of a cryptographic hash function, such as SHA-256, so that the resulting hash depends on both the record content and the nonce. The nonce may be stored locally together with the corresponding record and may not be transmitted externally. This step may provide an additional layer of privacy protection when inclusion proofs, also referred to as Merkle proofs, are shared with external parties such as regulatory auditors.

An inclusion proof may comprise set of cryptographic hashes extracted from the Merkle tree that enables a verifier to confirm that a specific audit record is included in a given Merkle root without requiring access to all other records in the batch. In particular, the inclusion proof may comprise the sibling hashes along the path from the leaf corresponding to the specific record to the root of the tree. By recomputing the hash path using these sibling values, the verifier can independently confirm that the record is part of the batch summarized by the Merkle root.

In a preferred embodiment, the combination of multiple-field records containing timestamps, model identifiers, input parameters, and output values; hash chaining; and restricted ledger access may provide sufficient entropy without per-record nonce generation.

In an embodiment, each record's fingerprint includes the previous record's fingerprint. This creates a robust hash chain. Altering any historical record changes its fingerprint, which mismatches with the next record's expected reference, cascading through the entire chain.

In an embodiment, the audit log may be built on Hyperledger Fabric, i.e., on a controlled record-keeping framework running locally on the edge appliance. In such embodiment, each facility gets its own isolated channel. In the context of Hyperledger Fabric, a channel is a private communication sub-network within the distributed ledger, each channel maintaining its own independent ledger and set of transactions.

An isolated channel means that each facility operates its own separate ledger instance, such that the audit records of one facility are not visible to or accessible by any other facility or by the solution provider. This ensures cross-facility data isolation at the ledger level. Private-data collections may ensure no cross-facility visibility. The solution provider has no read access to the ledger.

In an embodiment, Individual records can be signed by the hardware root of trust, creating device-specific proof that each record originated from this specific physical appliance at a specific time.

In an embodiment, the Merkle root computed over a batch of audit records is published as data within a transaction on the public blockchain, providing an immutable and independently verifiable timestamp of the audit log state at the time of publication.

### 5. The fifth computer subsystem of the invention

In an embodiment, the subsystem **5,** hereinafter referred as a blockchain anchor, is configured as independent tamper-evidence arranged to create a permanent, publicly verifiable, and independently timestamped proof that the audit log existed in a specific state at a specific moment without exposing any private data.

In an embodiment, an anchoring agent operates according to a schedule, preferably a configurable schedule. By default, the schedule may be set on a daily basis. The anchoring agent selects a batch of audit records committed during a defined period, computes a Merkle root over the batch of the audit records, i.e., a single fingerprint representative of the entire batch, and submits only that fingerprint to a public blockchain network. In an embodiment, the blockchain transaction ID is stored locally.

In an embodiment, only the Merkle root, for example a 256-bit number, is written on-chain in. No operational data, personal data, record contents or facility identifiers are written to the blockchain.

In an embodiment, all actual record data, all nonces, and all record contents remains stored locally. A verifier who wants to verify integrity may recompute the Merkle root from the local records and compare the recomputed Merkle root with the on-chain value. If the values of the recomputed Merkle value match the on-chain value, the records are verified as untampered.

In an embodiment, when the internet connectivity is unavailable, the anchoring agent stores pending submissions locally and sends them once connectivity is restored.

In an embodiment, the Merkle root computed by the anchoring agent for a given batch of audit records includes, as one of its leaves, the Merkle root of the immediately preceding batch, such that the Merkle roots themselves form a hash chain across successive batches.

In this manner, any attempt to maintain divergent versions of the audit log between anchoring events becomes detectable retroactively: a verifier walking the chain of Merkle roots from the most recent anchored value back to a defined genesis value will detect any inconsistency, even if no individual Merkle root has been challenged in isolation.

In an embodiment, the genesis Merkle root is derived from the installation attestation of the edge appliance, thereby binding the entire audit history to the verified identity of the physical computing device on which the audit records were generated.

In an embodiment, the blockchain network may be Ethereum mainnet, Polygon PoS, any EVM-compatible chain, Hyperledger Besu, Hedera Hashgraph, or any public ledger providing immutability guarantees.

An embodiment of a complete audit log and blockchain anchoring pipeline according to the present disclosure is illustrated in **Fig. 4****.**

**Figure 4** schematically illustrates an embodiment of an audit log and blockchain anchoring pipeline for recording and externally anchoring operational events generated within a controlled infrastructure/ facility.

In the illustrated embodiment, a plurality of event sources, such as airlock events, vault events, data valve events, AI decisions, device commands, data destruction events, and trust verification events, provide event data to a first processing stage.

At **Stage 1,** each event record is signed by a Trusted Platform Module, TPM, or other hardware root of trust. The signature may provide an indication of the physical device from which the record originates and of the time associated with the record.

At **Stage 2,** the signed record is admitted to an append-only audit log. The audit log is preferably configured such that only records carrying a valid signature from the hardware root of trust are admitted, and records are added without overwriting previously stored records. Each record may comprise an event type, event details, a timestamp, and a per-facility isolated channel.

At **Stage 3,** the audit records are subjected to cryptographic hash chaining. In particular, each record's chain fingerprint is computed from the event fingerprint, the cryptographic signature, and the chain fingerprint of the preceding record, such that the signature is bound into the hash chain and modification of any record or signature affects the continuity of the chain.

At **Stage 4,** the hardware root of trust is configured to carry out the steps of:
- computing a Merkle root, represented by a component A, wherein a plurality of chain fingerprints is combined in a tree structure to generate a single fingerprint, for example a 256-bit Merkle root,
- submitting, by an anchoring agent, represented by a component B, the Merkle root according to a configurable schedule and storing pending submissions locally when network connectivity is unavailable,
- writing only the Merkle root to a public blockchain, represented by a component C, for example Ethereum or Polygon.

In the illustrated embodiment, the blockchain stores the Merkle root without storing the underlying record contents.

**Figure 4** thus illustrates an embodiment in which operational events are recorded in an append-only audit log, cryptographically chained, signed by a hardware-based trust component, aggregated into a Merkle root, and anchored to a public blockchain.

### 6. The sixth computer subsystem of the invention

In an embodiment, the subsystem 6, hereinafter referred to as a device commander, is configured to control physical devices and autonomous mobile systems via a local network without dependency on internet or wide-area network connectivity.

In an embodiment, the device commander is configured to generate access credentials, preferably digital keys, and to transmit them to one or more devices via a local messaging protocol, preferably MQTT or an equivalent local messaging protocol, over a facility local area network (LAN). The device commander may further be configured to revoke access credentials by sending revocation commands to the respective device. In an embodiment, the device commander may be further configured to issue operational commands, such operational commands, comprising, for example, climate setpoints, lighting levels, and sensor configurations.

In an embodiment, generation and transmission of access credentials, revocation of access credentials, and issuance of operational commands are all carried out through the local network and without requiring WAN connectivity.

In an embodiment, the device commander is configured to manage different credential types depending on the type of device or system to be controlled.

In an embodiment, persistent credentials are generated for fixed devices such as door locks and climate controllers. These persistent credentials remain valid until explicitly revoked. In an embodiment, a revocation event associated with a persistent credential comprises a credential identifier, a device identifier, timestamp, and a triggering event.

In an embodiment, ephemeral credentials are generated for autonomous mobile systems, preferably delivery robots, cleaning robots, and logistics carts. These ephemeral credentials are associated with a built-in time-to-live countdown, i.e., a predefined time-to-live, such that, upon expiry of the corresponding predefined time, the credential automatically becomes invalid without requiring a revocation command. In an embodiment, the ephemeral credentials may further comprise spatial zone restrictions specifying one or more physical areas which the corresponding autonomous mobile system is authorized to enter.

In an embodiment, every credential-related and device-control event is recorded in the append only audit log. Such events may comprise credential generation, credential activation, credential revocation, automatic credential expiry, zone authorization, and transmission of device commands. In an embodiment, each recorded event is stored together with corresponding event details.

An embodiment of credential types and a device command flow according to the present invention is illustrated in **Fig. 5****.**

### 7. The seventh computer subsystem of the invention

In an embodiment, the subsystem **7,** hereinafter referred to as an AI accountability engine is configured to generate hardware-signed, blockchain-anchored, and tamper-evident proof of each AI decision, satisfying regulatory requirements in a manner not achievable by cloud-based system alone.

In an embodiment, each time an AI system associated with the facility generates a decision or recommendation, the AI system creates a corresponding AI decision audit record.

In an embodiment, the AI decision audit record comprises:
a) a model identifier indicating which specific AI model or algorithm produced an output, for example, in a hospitality application, the model identifier may be "causal-uplift-v2" for a pricing recommendation,
b) input features indicating which data was provided to the model, wherein personal data is removed and replaced with anonymized equivalents before recording, such that the log may shows "occupancy rate: 78%, day-of-week: Wednesday, demand index: high", but not guest names or patient identifiers,
c) an output decision indicating what the AI recommended; (a specific price, a triage category, a fraud alert level, a maintenance priority),
d) one or more confidence scores, preferably represented by a number between 0 and 1, indicating a degree of certainty associated with the AI output, such for example: 0.92 indicating a high confidence, and 0.51 indicating that the AI was barely above a coin flip,
e) a human override indicator indicating if a human accepted the AI recommendation as generated, modified the AI recommendation, ore rejected the AI modification, wherein, if the AI recommendation is modified by the human, the modification is also recorded,
f) a timestamp indicating the exact time of the decision or recommendation; and, optionally,

- a training dataset version identifier indicating which version of the training data produced the model that generated the decision or recommendation.

In an embodiment, the AI decision data is processed through the same audit pipeline as other records in the computer system, such that the AI decision audit record is hash-chained, included in Merkle root, and anchored to blockchain.

This is technically significant because regularity frameworks, such as the EU AI Act, require tamper-evident logs. A cloud vendor's database log may not be tamper-evident, since the vendor may have written access and may therefore alter the log. By contrast, a hardware-signed, hash-chained, blockchain-anchored log generated on a device for which the solution provider has no data access provides tamper-evidence. This constitutes a structural and architectural advantage over software-only solutions.

### 8. The eighth computer subsystem of the invention

In an embodiment, the subsystem **8,** hereinafter referred to as a data destruction engine, is configured to automatically enforce data retention policies and to create blockchain-anchored proof that data was lawfully destroyed.

In an embodiment, a data retention enforcement engine continuously evaluates facility data against configured retention policies. Each retention policy may specify which data category is concerned, how long the corresponding data may be stored, and which event triggers the retention period, such event comprising, for example, checkout, account closure, procedure completion, or policy expiration,

In an embodiment, when a retention period expires, the data destruction engine is configured to carry out the following steps:
- irreversibly destroying the corresponding data from the local storage,
- generating a proof of destruction record,
- writing the_proof of destruction record to the audit log, hash-chained, included in the Merkle root, and anchored to the blockchain.

In an embodiment, the proof of destruction record enables subsequent verification, by a regulator, of the exact time at which the data was destroyed and the retention policy under which the data was destroyed.

In an embodiment, the proof of destruction record may comprise a data category, the applicable retention policy, a destruction timestamp, and a cryptographic attestation corresponding to a mathematical verification computed over the storage region after the destruction, proving that the data is no longer retrievable. The attestation cryptographically establishes, through positive mathematical evidence, that the data no longer exists.

In an embodiment, the proof of destruction mechanism may operate as follows. Prior to destruction, the data destruction engine computes a cryptographic hash, for example a SHA-256 hash, of the data to be destroyed. Said hash serves as evidence that specific data existed in the storage region at the time of destruction.

The pre-destruction hash is held in the working memory of the data destruction engine during the destruction operation. Upon completion of the destruction operation and computation of the post-destruction hash, both hashes are included in the proof of destruction record, which is written to the append-only audit log.

The destruction step then irreversibly overwrites the storage region containing the data, using, for example, a cryptographic erasure method or a secure overwrite method.

In an embodiment employing cryptographic erasure, the encryption key for an encrypted storage volume is destroyed, rendering the encrypted data permanently unrecoverable.

In an embodiment employing secure overwrite, random data or zero-value data is written to every physical storage location occupied by the original data.

After destruction, the data destruction engine computes a second cryptographic hash over the same storage region. This post-destruction hash, in combination with the pre-destruction hash, constitutes a cryptographic attestation. More specifically, it demonstrates that data corresponding to the pre-destruction hash existed prior to the destruction operation and that the storage region no longer contains data corresponding to said hash after the destruction operation.

In an embodiment, the proof of destruction record comprises the data category, the applicable retention policy identifier, the destruction timestamp, the pre-destruction hash, and the post-destruction hash, and is then written to the append-only audit log, hash-chained, included in the next Merkle root computation, and anchored to the public blockchain.

In an embodiment using cryptographic erasure, the proof of destruction record further comprises an identifier of the encryption key that was destroyed, providing evidence that the key required to decrypt the stored data has been irreversibly deleted.

### 9. The following nineth subsystem of the invention

In an embodiment, the subsystem **9,** hereinafter referred to a trust verification subsystem is configured to protect the foundation of the computer system, by providing: an initial installation attestation capability; a post-quantum cryptographic agility capability; and a federated model update verification capability.

In an embodiment, the trust verification system comprises an initial installation attestation capability configured to verify, when a new edge appliance is powered on for the first time at a facility, if the edge appliance is genuine and if the firmware or other startup software has been altered before deployment.

In particular, a hardware root of trust is configured to generate an attestation report containing:
a) an endorsement key, EK, certificate proving that the chip is genuine and originates from a known manufacturer,
b) platform configuration register (PCR) values corresponding to measurements of one or more software components loaded during startup, including firmware, boot loader, and OS kernel; and
c) a freshness proof comprising a random challenge provided by a facility operator to prevent replay of old attestations.

In an embodiment, said attestation report is sent to a verification authority configured to confirm that: the EK certificate chains to the manufacturer's root certificate, thereby confirming that the device is genuine; the PCR values match expected values for an untampered device, confirming that firmware has not been altered during shipping; and the freshness proof is current.

In an embodiment, the device is not allowed to join the operational cluster or process facility data until said verification, i.e. installation attestation, passes. The operational cluster may comprise a group of computing nodes within the edge appliance configured to collectively execute the operational software.

In a preferred embodiment, the operational cluster comprises three computing nodes, in particular one active computing node and two standby computing nodes. Failed attestation results in quarantine and operator notification.

In an embodiment, the verification authority comprises one or more of: a provisioning service of the solution provider's together with a manufacturer's certificate authority; a decentralized identity registry where the manufacturer publishes expected device identities; and a hardware certificate transparency log.

In an embodiment, the trust verification system may further comprise a post-quantum cryptographic agility capability configured to enable the hardware root of trust to support post-quantum cryptographic algorithms for cryptographic operations, such as, for example, signature generation, key exchange, and attestation.

In an embodiment, said post-quantum cryptographic algorithms may comprise one or more of: ML-DSA, particularly FIPS 204 and/or lattice-based signatures; ML-KEM, particularly FIPS 203, and/or lattice-based key exchange; and SLH-DSA, particularly FIPS 205 and/or hash-based signatures.

In an embodiment, the trust verification system supports a hybrid mode in which dual signatures are generated using both a classical algorithm and a post-quantum algorithm for each audit record during a transition period, ensuring compatibility with systems that haven't yet upgraded.

By way of example, when signing an audit record, the hardware root of trust generates two signatures over the same audit-record data, one using a classical digital signature algorithm, such as Elliptic Curve Digital Signature Algorithm (ECDSA), and one using a post-quantum digital signature algorithm, such as Module-Lattice Digital Signature Algorithm (ML-DSA), for example in accordance with Federal Information Processing Standard 204 (FIPS 204), issued by NIST. Both signatures are stored alongside the audit record.

A verifier may validate the audit record using either signature. During the transition period, this allows systems supporting only classical digital signature algorithms to verify the audit record using the classical signature, while also allowing systems supporting post-quantum digital signature algorithms to verify the audit record using the post-quantum signature.

When multiple facilities share AI model improvements, namely mathematical gradients rather than the raw data, in order to improve the AI model used at each facility, a compromised facility may inject poisoned model weights, corrupting the AI models of all facility's. This is a well-documented machine learning security threat (Byzantine fault tolerance in federated learning; see McMahan et al., 2017, "Communication-Efficient Learning of Deep Networks from Decentralized Data," Google Research).

In an embodiment, the trust verification system further comprises a federated model update verification capability configured to verify model weight updates received from another facility before such updates are merged into a local inference model, said verification comprising sequentially carrying out: cryptographic origin verification based on TPM attestation of the sending facility; and statistical divergence analysis by comparing the received model weight updates with a local model state.

When an edge appliance receives a model weight update from another facility, the trust verification system is configured to perform two checks.

In an embodiment, a first check comprises origin verification, wherein the model weight update must be accompanied by a cryptographic attestation from the sending facility's hardware root of trust. The receiving edge appliance verifies said attestation against a registry of trusted facility devices. If verification fails, the model weight update is rejected, and the rejection is logged.

In an embodiment, a second check comprises content reasonableness based on statistical divergence. More particularly, the receiving edge appliance computes a statistical divergence metric between the incoming model weight update and the current local model state. If the divergence exceeds a configurable threshold, indicating that the update is abnormally different from what legitimate learning would produce, the update is quarantined for human review. The operator's approval or rejection is logged.

In an embodiment, only updates that pass both the origin and the content reasonableness verification are merged into the local inference model.

In an embodiment, model weight updates contain only anonymized numerical vectors and do not contain personal data, nor raw operational data.

In an embodiment, in a single-facility deployment, the federated model update verification capability remains inactive.

In an embodiment, said capability may be activated when the computer system, implemented as an edge appliance, operates in a multi-facility configuration where model weight updates are exchanged between edge appliances. In this configuration, the federated model update verification capability of Subsystem 9C may be activated on each edge appliance participating in the exchange of model weight updates.

### III. The interaction between the hardware and the software according to the present invention.

In an embodiment, the computer subsystems described above may be configured to operate together as an integrated computer system, and to share two common elements, namely the hardware security chip and the central audit log.

The following describes the data flows between the subsystems and the specific role of the hardware security chip in each operation.

In an embodiment, inbound operational data is received from an external system via a WAN and passed to the airlock subsystem, where the TLS protocol, and credentials are verified, an idempotency check is carried out, an ordering check is carried out, and a state change magnitude validation is carried out. I f said checks and validations are satisfied, the inbound operational data is applied to the local state. A corresponding record of the data is then entered into the audit log engine in a hash-chained form, the corresponding record is optionally signed by the TPM, the record is included in a subsequent Merkle root batch and submitted by an anchoring agent to a public blockchain.

In an embodiment, an inbound software update is received from an update service via the WAN and passed to the vault subsystem, where a signature check is carried out using a TPM key inside a TEE and a component hash verification is carried out. If the inbound software update is valid, the inbound software update is applied and logged. If the inbound software update is invalid, the inbound software update is rejected and logged. In either case, the corresponding record enters the same audit pipeline.

In an embodiment, the audit pipeline comprises: formatting event data as an audit record; hash-chaining the audit record to a preceding record in an audit log; optionally signing the audit record using a hardware root of trust; batching the audit record for Merkle root computation; and submitting the Merkle root to a public blockchain by an anchoring agent according to a configurable schedule.

In an embodiment, outbound authorized data originates from a local state change and is classified by a software egress policy engine. If the data is authorized operational telemetry, said data passes to a hardware-enforced outbound filter, said filter comprising a hardware whitelist to be checked and, → if a pattern match is found between the data and the hardware whitelist, the data is transmitted to a distribution partner. The corresponding event is logged.

In an embodiment, outbound data directed to the solution provider is controlled such that the software egress policy permits only health telemetry and update status data, and a hardware filter is configured with a whitelist that expressly allows only health telemetry and update status data to pass, such that any outbound data that does not correspond to said whitelist is dropped at hardware level and logged.

Device health telemetry may comprise data relating to the operational status of the edge appliance hardware, including, for example, processor temperature, memory utilisation, storage capacity, network interface status, uptime duration, and error logs.

Software update delivery status data may comprise data confirming whether a software update was successfully received, verified, and applied, or rejected. These categories do not include any operational facility data, personal data, or audit log contents.

In an embodiment, an AI engine generates a recommendation, following which the system creates an AI decision audit record comprising a model ID, anonymized inputs, an output, a confidence value, and an override status. Said AI decision audit record enters the audit pipeline comprising hash chaining, generation of a Merkle root, and anchoring on a blockchain.

In an embodiment, a retention engine evaluates data against one or more policies and expired data is destroyed. A proof of destruction record is then generated and entered into the audit pipeline, followed by blockchain anchoring, thereby providing permanent evidence of deletion, in particular a lawful deletion.

In an embodiment, an edge appliance communicates with a device command, particularly a device command interface to generate a credential, wherein the credential is persistent for static devices and ephemeral with a TTL for robots. The credential is transmitted via MQTT over the LAN, the device executes the command, and credential events are logged. Said logged events enter the audit pipeline.

In an embodiment, in a multi-facility configuration, a Local AI trains on local data, a mathematical gradient is extracted, encrypted and sent to aggregation point. A receiving appliance verifies the sender's TPM attestation and checks statistical divergence, wherein, if both verifications pass, the gradient is merged into the local model, and if either verification fail, the gradient is quarantined or rejected, all corresponding events being logged.

In an embodiment, during a first installation, a new device is powered on, and the TPM generates an attestation comprising an EK certificate, PCR values, and a freshness nonce. Said attestation is sent to a verification authority. If the device is verified as genuine and untampered, the device is permitted to join the operational cluster of computing nodes within the edge appliance and to begin executing the operational software comprising all nine subsystems disclosed herein.

If verification fails, the device is quarantined. The corresponding event is logged.

In an embodiment, the hardware root of trust chip may be configured to carry out the steps of:
- storing, in a sealed and non-extractable form, a verification key for software updates,
- verifying software update signatures within the isolated execution environment,
- signing individual audit records to provide proof of device origin,
- generating cryptographic nonces by means of an internal random number generator,
- generating attestation reports during initial installation,
- verifying incoming federated model updates received from other facilities,
- supporting classical algorithms, preferably RSA, and ECC; and post-quantum algorithms, preferably a ML-DSA, ML-KEM, and a SLH-DSA algorithms,
- measuring boot components into platform configuration registers, and
- generating and protecting ephemeral credential signing keys,
- sealing operational secrets of the edge appliance, including an unseal envelope of an internal secrets management service and encryption keys of full disk encryption volumes, against a platform configuration register policy, such that said operational secrets are released only when the edge appliance has booted into a verified software state matching said policy.

In an embodiment, the edge appliance comprises three identical computing nodes, wherein one computing node is configured to be active for write operations and two computing nodes are configured to be in standby mode.

In an embodiment, the edge appliance is configured such that, if the active node fails, one standby computing node of the two standby computing nodes automatically takes over.

In an embodiment, the edge appliance is configured such that the most recent committed audit segment may be replicated to at least one standby computing node before failover.

In an embodiment, the edge appliance is configured such that zero-audit data loss is ensured during failover.

In an embodiment, the edge appliance is configured to maintain continuous operation without cloud dependency.

### Examples of some applications across industries

The following examples illustrate how the system of the present invention can be deployed in specific industry sectors. These examples are nonlimiting; the system is applicable to any sector where facility operations require local data sovereignty, tamper-evident audit trails of automated or AI-assisted decisions, provable data lifecycle management, or offline-capable control of physical devices and autonomous systems.

However, the invention can be used in other fields whenever is necessary to manage data, as below exemplified.

### Example 1.

In the hospitality sector, for example hotel and accommodation operations, the computer system disclosed herein may be configured to consolidate functions currently spread across multiple independent cloud-based platforms - including property management, revenue management, channel distribution, point-of-sale, building management, access control, guest self-service, staff coordination, and AI-driven operational optimization - into a single locally operated system.

The following examples show how the subsystems apply to typical hotel operations:
**AI decision audit:** Revenue management pricing recommendations (model: "causal-uplift-v2", inputs: occupancy + demand + seasonality, output: suggested rate, confidence: 0.87, human override: revenue manager modifies rate). AI-driven staffing schedules. Predictive maintenance alerts for HVAC equipment.

**Data retention:** Guest identity document scans deleted 24 hours after checkout. Payment card data per PCI-DSS Requirement 3.1. Guest preference records per consent expiration.

**Device commands:** Digital room keys via smart locks (MQTT). HVAC setpoint adjustments per occupancy. Lighting schedules. Autonomous delivery robot dispatched from kitchen to guest room with 15-minute ephemeral credential and zone restriction to service corridor + destination floor.

**State-change validation:** Channel manager sends "set all rates to €0 for next 30 days" quarantined, human reviews, rejects as compromised partner.

**Federated learning:** 49 properties share mathematical pricing improvements. Property in Marrakech learns Ramadan booking window extension converts 12% better. Improvement shared to 48 other properties without any guest data leaving any building.

### Example 2.

In healthcare, the computer system disclosed herein may be configured to manage patient data, clinical AI decisions, and physical access control locally, supporting compliance with the EU AI Act, GDPR, and HIPAA. The following examples show sector-specific applications:
**AI decision audit:** Emergency department triage recommendation (model: "triage-severity-v3", inputs: vital signs + symptom set patient-identifiable fields anonymized, output: triage category, confidence: 0.92, human override: clinical lead accepts). Drug interaction alerts. Diagnostic imaging prioritization.

**Data retention:** Patient records retained per national health record laws (typically 10-30 years). Diagnostic imaging per HIPAA §164.530(j). Prescription records per pharmaceutical regulation. Proof of destruction when retention expires.

**Device commands:** Operating theatre access tokens for surgical teams. Pharmacy storage access. Restricted ward entry credentials. Medical device parameter commands (infusion pump setpoints). Upon procedure completion, theatre credentials automatically revoked.

**Federated learning:** Hospital network shares mathematical improvements in triage model accuracy without any patient data leaving any hospital.

**Regulatory drivers:** EU AI Act Annex III Category 5 (medical devices and AI-assisted diagnostics). GDPR. HIPAA. NIS2 (healthcare as essential service).

### Example 3.

In financial services, the computer system may be configured to provide tamper-evident audit trails for AI-driven credit scoring, fraud detection, and anti-money laundering decisions, while managing data retention under banking regulations. The following examples show sector-specific applications:
**AI decision audit:** Credit scoring decisions (model: "credit-risk-v4", inputs: financial indicators customer-identifiable fields anonymized, output: risk score + credit limit recommendation, confidence: 0.78, human override: credit officer modifies limit). Fraud detection alerts. Anti-money laundering flagging. Algorithmic trading recommendations.

**Data retention:** Customer identification records retained 5 years post-account-closure per AML regulations. Transaction logs per financial recordkeeping requirements. Credit assessment data per regulatory mandates. Blockchain-anchored proof of destruction when periods expire.

**Device commands:** Branch vault access tokens. ATM maintenance credentials. Secure room access for regulatory inspections. Autonomous cash transport robot with ephemeral credential and zone restriction to vault corridor.

**Regulatory drivers:** EU AI Act Annex III Category 4 (credit scoring). GDPR. PSD2. MiFID II. Basel III operational risk.

### Example 4.

In military and government environments, the computer system's ability to operate fully offline on air-gapped networks and to verify hardware integrity upon installation makes it suitable for secure and remote facilities. The following examples show sector-specific applications:
**AI decision audit:** Threat assessment model outputs. Logistics optimization recommendations. Personnel assignment decisions with full human override chain documented and blockchain-anchored.

**Data retention:** Classified document handling with mandatory destruction schedules. Intelligence briefing lifecycle management. Proof of destruction for declassification compliance.

**Device commands:** Secure area access credentials. Weapons storage access tokens. Facility lockdown commands. ALL operating on air-gapped (no internet) local networks the invention's offline-first design is native to military requirements.

**Installation attestation:** Critical for military guarantees appliance firmware was not compromised during transport to remote installation sites.

**Regulatory drivers:** NATO STANAG requirements. National security classifications. NIST SP 800-171 (CUI protection). NSA CNSA 2.0 (post-quantum transition by 2027 for national security systems).

### Example 5.

In industrial environments, the computer system may be configured to provide tamper-evident records of AI-driven quality control and safety decisions, combined with physical access control for hazardous areas and autonomous logistics systems. The following examples show sector-specific applications:
**AI decision audit:** Predictive maintenance recommendations for production line equipment. Quality control pass/fail decisions. Safety system monitoring alerts. Production schedule optimization.

**Data retention:** Equipment inspection records. Safety incident documentation. Environmental compliance data. Proof of destruction per industrial recordkeeping regulations.

**Device commands:** Machine safety interlock tokens. Clean room entry credentials. Hazardous material storage access. Robotic arm operational parameters. Autonomous logistics robot with ephemeral credential and zone restriction to warehouse sector.

**Federated learning:** Factory network shares mathematical improvements in predictive maintenance model accuracy without any production data leaving any plant.

**Regulatory drivers:** EU AI Act Annex I (safety components). NIS2 (essential services). Machinery Regulation (2023/1230). ISO 27001.

For each major functional component of the computer system disclosed herein, has alternative implementations may achieve the same technical result.

The computer system requires a physical security chip, a hardware root of trust configured to store cryptographic keys in a manner preventing extraction thereof by software, including by the operating system. The physical security chip is the foundation of all security operations in the computer system: the chip may be used for signing audit records, verifying software updates, generating random numbers for record protection, and proving the identity of the device during installation.

In a preferred embodiment, the physical security chip is a Trusted Platform Module (TPM 2.0) conforming to the Trusted Computing Group specification, for example ISO/IEC 11889:2015.

In an embodiment, the hardware root of trust is selected form a list comprising: ARM TrustZone; Intel SGX; RISC-V security extensions; a hardware security module (HSM); and a secure element (SE).

ARM TrustZone may provide a secure execution environment integrated into one or more ARM processors, commonly used in mobile and embedded devices. The ARM TrustZone creates an isolated processing zone within the main processor.

The Intel SGX (Software Guard Extensions) and Intel TDX (Trust Domain Extensions) may provide enclave-based isolation and protected memory regions within an intel processor, preventing access even by the operating system.

The RISC-V security extensions may provide, within the open-source RISC-V processor architecture, security isolation capabilities, providing hardware-enforced separation between trusted and untrusted execution environments.

The hardware security module (HSM)may provide a dedicated cryptographic processing device configured to generate, store, and manage cryptographic keys. HSMs may provide a higher level of security than a TPM, but with an increased cost and physical size.

A secure element (SE)is a smaller and lower-cost variant of an HSM, commonly used in smart cards, SIM cards, and IoT devices. The secure element may provide tamper-resistant storage of cryptographic keys in a compact form factor.

In an embodiment, the hardware root of trust is implemented as a firmware-based Trusted Platform Module running within a hardware-isolated execution environment of the processor, such as Intel Platform Trust Technology (Intel PTT) or AMD firmware TPM (AMD fTPM). Such implementations provide TPM 2.0 specification compliance within the processor silicon and satisfy the functional requirement that cryptographic keys are stored in a manner preventing extraction thereof by software, including by the operating system, without requiring a separate discrete chip.

Each of the above implementations fulfils the same fundamental requirement, namely providing hardware-protected storage of cryptographic keys such that the cryptographic keys cannot be extracted by software.

The computer system requires a public, decentralized ledger to which a Merkle root, representing a mathematical fingerprint summarizing a batch of audit records, is periodically submitted. The ledger is configured to provide an independent tamper-proof timestamp demonstrating that the audit log existed in a specific state at a specific moment. No operational data or personal information is written to the ledger.

In a preferred embodiment, the Merkle root is submitted to the Ethereum mainnet, a public blockchain with widespread adoption and long-term operational history.

In an embodiment, the ledger is selected from a list comprising: a polygon PoS; an EVM-compatible network such as Arbitrum, Optimism, or Base; a Hyperledger Besu; a Hedera Hashgraph; and a custom private ledger with periodic public anchoring.

Polygon PoS may provide a cost-optimized blockchain network compatible with Ethereum, offering lower transaction fees while maintaining public verifiability. An EVM-compatible networks (may provide a public blockchain networks using the same technical interface as Ethereum, allowing transactions submissions, by the computer system, using substantially the same software with minimal modification.

An Hyperledger Besu may provide an enterprise-grade implementation of a Ethereum protocol that can operate as either a public or a permissioned network.

Hedera Hashgraph may provide a distributed ledger using a directed acyclic graph structure instead of a traditional blockchain and may offering high throughput and finality guarantees.

A custom private ledger with periodic public anchoring may provide a privately operated ledger configured to periodically submit the summary fingerprint to a public blockchain, providing a two-tier anchoring architecture.

In an embodiment, the Merkle root is anchored to two independent attestation services in parallel: (a) the public, decentralized ledger as previously disclosed, providing tamper-evident immutability and decentralized verification; and (b) a qualified electronic timestamp authority compliant with RFC 3161, providing a qualified timestamp having legal evidentiary value under applicable electronic signature regulations such as Regulation (EU) No 910/2014. The two anchoring receipts are written back into the local append-only audit log as further records, hash-chained and signed by the hardware root of trust, thereby creating a self-referential proof linking the audit log to both attestation services. A verifier may independently confirm the integrity of the audit log by recomputing the Merkle root and comparing it to either or both of the published anchoring receipts; the failure or compromise of one attestation service does not compromise the verification path provided by the other.

Each of the above implementations fulfils the same functional requirement, namely providing an immutable and publicly verifiable record of the submitted fingerprint with a reliable timestamp.

As previously disclosed, the system requires a local, append-only record-keeping structure configured to store all operational events, AI decision records, credential events, and data destruction proofs within the facility. The record-keeping structure must be configured to enforce append-only behaviour such that records may be added but not modified or deleted, and to support cryptographic hash chaining such that each record comprises a cryptographic fingerprint of a preceding record.

In a preferred embodiment, the local audit log is implemented using Hyperledger Fabric, in particular a permissioned distributed ledger framework. Hyperledger Fabric may provide per-facility isolated channels, private data collections, and built-in append-only guarantees.

In an embodiment, the audit log is selected from a list comprising an append-only data structure with cryptographic hash chaining; CockroachDB configured with append-only constraints; a custom hash-chained log built on PostgreSQL; and a Merkle Directed Acyclic Graph structure.

An append-only data structure with cryptographic hash chaining may provide a custom-built log where each entry comprises a cryptographic hash of a preceding entry, ensuring tamper detection regardless of the underlying storage technology.

CockroachDB configured with append-only constraints may provide a distributed relational database in which write restrictions enforced at the database level prevent modification or deletion of committed records.

A custom hash-chained log built on PostgreSQL may provide a relational database implementation in which append-only behaviour is enforced by application-level logic and in which cryptographic hash chains are computed across sequential records.

A Merkle DAG structure may provide a content-addressable storage model where each data block is identified by its cryptographic hash, and relationships between blocks form a directed acyclic graph. This structure may be used in systems such as InterPlanetary File System (IPFS) .

Each of the above implementations fulfils the same functional requirement, namely enforcing append-only storage of records with cryptographic linking between sequential entries, enabling detection of any retroactive modification.

### IV. The device communication protocols of the invention

The computer system disclosed herein requires a lightweight messaging protocol for communication between the edge appliance and local physical devices (such as door locks, climate controllers, sensors, and autonomous mobile systems) over the facility's local area network. The protocol must operate without internet connectivity and support command delivery, credential transmission, and status reporting.

In a preferred embodiment, device communication uses MQTT (Message Queuing Telemetry Transport), a lightweight publish-subscribe messaging protocol designed for constrained devices and low-bandwidth networks. Suitable alternative implementations include:
- CoAP (Constrained Application Protocol): a protocol designed specifically for very small, resource-limited IoT devices, using a request-response model over UDP.
- AMQP (Advanced Message Queuing Protocol): an enterprise-grade messaging protocol offering reliable message delivery, queuing, and routing capabilities.
- ZigBee and Z-Wave: wireless communication protocols designed for building automation, commonly used for lighting control, climate management, and sensor networks.
- BLE (Bluetooth Low Energy): a short-range wireless protocol used for proximity-based device communication, commonly applied in access control and beacon systems.
- Matter: an emerging smart building interoperability standard, developed by the Connectivity Standards Alliance, designed to unify device communication across manufacturers.

All of the above are equivalent in that they enable command and data exchange between the edge appliance and local devices without requiring internet connectivity.

### V. The hardware outbound filters of the invention

As previously disclosed, the computer system requires a physical filtering component arranged between the edge appliance and the wide-area network connection. The physical filtering component is configured to enforce a whitelist of permitted outbound communication patterns using rules stored in non-software-modifiable memory.

In this manner, even if the operating system of the edge appliance is fully compromised, unauthorized data transmission may still be prevented.

The physical filtering component may be implemented, for example, as:
- a dedicated network processing unit having firmware-level packet inspection rules, i.e., a specialized network chip configured to examines outbound packets against filtering rules stored in its own firmware, independent of the host operating system,
- a field-programmable gate array (FPGA), programmed with hardcoded filtering logic, namely a reconfigurable hardware chip programmed with specific packet filtering rules that cannot be modified by software running on the main processor,

- a physically separate network gateway arranged within the appliance enclosure and positioned inline between the edge appliance and the network connection, the network gateway being configured to execute a minimal operating system with filtering rules that are inaccessible from the main appliance, or
- a network interface card (NIC) having custom firmware whitelist: a standard network adapter whose firmware has been configured with a fixed set of permitted outbound communication patterns.

Each of the above implementations fulfils the same functional requirement, namely providing a hardware-level data filtering that operates independently of the main operating system of the computer system, implemented as the edge appliance.

### VI. The post-quantum algorithms of the invention

The computer system requires cryptographic algorithms for signature generation, key exchange, and attestation that are resistant to attacks by quantum computers. These algorithms complement or replace classical algorithms (RSA, ECC) to ensure the security of audit records, blockchain anchoring, and device attestation remains valid as quantum computing technology advances.

In a preferred embodiment, the computer system implements the algorithms standardized by the US National Institute of Standards and Technology (NIST) in 2024. Suitable implementations include:
- ML-DSA (Module-Lattice Digital Signature Algorithm, FIPS 204): a lattice-based digital signature algorithm, used as the primary post-quantum signature mechanism for audit record signing and attestation,
- ML-KEM (Module-Lattice Key Encapsulation Mechanism, FIPS 203): a lattice-based key encapsulation algorithm used for secure key exchange operations,
- SLH-DSA (Stateless Hash-Based Digital Signature Algorithm, FIPS 205): a hash-based signature algorithm that relies solely on the security of hash functions, providing an alternative mathematical foundation to lattice-based approaches,
- Hybrid mode: a transitional configuration in which the system generates dual signatures for each operation - one using a classical algorithm (RSA or ECC) and one using a post-quantum algorithm - ensuring compatibility with systems that have not yet transitioned to post-quantum cryptography,
- XMSS (eXtended Merkle Signature Scheme): a stateful hash-based signature algorithm already standardized by the Internet Engineering Task Force (IETF), providing an additional alternative for environments requiring standards-based hash-based signatures.

The above algorithms serve the same purpose - providing cryptographic security against quantum computing attacks - but use different mathematical foundations (lattice structures, hash functions), offering resilience against the possibility that a vulnerability is discovered in any single approach.

### VII. The verification authorities of the invention

As an example, for the installation attestation, the computer system requires a trusted verification authority that validates the attestation report generated by the hardware root of trust during initial installation. This authority confirms that the device is genuine (its hardware security chip was manufactured by a known producer) and that its firmware has not been tampered with during shipping or storage.

Suitable implementations for the verification authority include:
- The solution provider's provisioning service combined with the hardware manufacturer's certificate authority: the solution provider operates a verification server that checks the device's attestation report against the hardware manufacturer's root certificate chain, confirming device authenticity and firmware integrity.
- A decentralized identity registry: the hardware manufacturer publishes expected device identities and firmware measurements to a publicly accessible registry, allowing the facility operator to verify the device independently without relying on the solution provider.
- A hardware certificate transparency log maintained by the manufacturer: a publicly auditable log of all manufactured devices and their expected attestation values, allowing any party to verify that a specific device identity was legitimately issued.

The above implementations serve the same purpose - confirming device authenticity and integrity at first installation - but differ in the degree of trust placed in the solution provider versus independent public verification.

### GLOSSARY OF TERMS AND CONCEPTS

Every technical word or concept used in the present invention is defined here.

**Facility:** Any physical building or site that has its own local computer network and runs operational workloads. This includes hotels, hospitals, factories, bank branches, military installations, government offices, data centres, energy plants, and any other physical site. The invention deliberately uses this general word to cover all industries.

**Edge appliance:** A physical computing device a locked box containing multiple mini-computers installed inside the facility's own network. It runs all operational software locally, on the building's premises. It does not depend on any remote server or internet-based cloud to function. It is the facility's private computing brain. In the current design, it contains three identical computing nodes for redundancy.

**Local area network (LAN):** The private wiring and wireless connections inside a single building. Devices on the LAN communicate with each other without using the internet. The edge appliance, all connected devices (locks, climate systems, sensors, robots), and all staff terminals are on the LAN.

**Wide-area network (WAN):** The internet connection between the building and the outside world. It is unreliable it can be slow, interrupted, or completely unavailable. The entire invention is designed so that the facility continues operating normally when the WAN is down.

**Authoritative facility state:** The concept that the edge appliance inside the building is the "single source of truth" for all operational data. If a remote cloud server says one thing and the local edge appliance says another, the edge appliance is correct. This is the opposite of how every existing cloud-based system works (Oracle OPERA, Mews, Cloudbeds), where the cloud is authoritative, and the local system is just a cache.

**Operational input payload:** Any incoming data message from an external system that could change the facility's operational state. Examples: a new reservation from a booking platform, a rate update from a channel manager, a cancellation from an online travel agency, a patient referral from an external hospital system, a transaction record from a financial network.

**Hardware root of trust:** A physical security component within the edge appliance, such as a dedicated chip soldered onto the circuit board or a firmware-based module running within a hardware-isolated execution environment of the processor. Its defining property: the secret keys stored inside it physically cannot be extracted, copied, or read by any software including the operating system running on the same device. It is the unbreakable physical anchor for all security proofs in the system. The most common implementation is a Trusted Platform Module (TPM) conforming to the Trusted Computing Group specification ISO/IEC 11889:2015. Other implementations include ARM TrustZone, Intel SGX/TDX, RISC-V security extensions, custom hardware security modules (HSMs), and secure elements (SEs). The invention works with any of these the key requirement is that the cryptographic keys cannot be extracted by software.

**Trusted Platform Module (TPM):** One specific type of hardware root of trust. A standardized security chip (TPM 2.0 is the current version) that generates cryptographic keys, stores them in tamper-resistant hardware, signs data to prove it came from this specific physical device, and measures the integrity of software loaded during startup. The TPM 2.0 specification was updated in July 2025 (version V185) to include post-quantum cryptographic algorithms. Source: Trusted Computing Group.

**Isolated execution environment (TEE):** A sealed-off zone inside the main processor where security-critical code runs. Even if an attacker gains complete control of the main operating system, they cannot see or interfere with what happens inside the TEE. Signature verification for software updates runs inside this zone. Examples: Intel SGX, Intel TDX, ARM TrustZone.

**Append-only audit log:** A record of every action the system takes. "Append-only" means entries can only be added never deleted, never modified, never overwritten. Each new entry contains a mathematical fingerprint of the previous entry (this is called hash chaining), so if anyone changes any historical record, the fingerprint chain breaks, and the tampering is immediately detectable.

**Cryptographic hash chaining:** The mechanism that makes the audit log tamper-evident. Every record includes a mathematical fingerprint (hash) of the record before it. This creates a chain where altering record #500 would change its fingerprint, which would mismatch with what record #501 expects, which would cascade through every subsequent record. You cannot change the past without breaking the chain.

**Cryptographic nonce:** A unique random number generated fresh for each individual audit record. This nonce is mixed into the record's data before the fingerprint is calculated. Without it, an outsider who knows the general structure of a record (for example, they know the AI model name and that the output was "approve" or "deny") could try all possible combinations to figure out the original data from the public fingerprint. The nonce makes this mathematically impossible because the attacker would also need to guess the random number. This is standard security practice. Source: W3C Merkle Disclosure specification; Certificate Transparency RFC 6962.

In a preferred embodiment of the present system, the combination of multiple-field records, hash chaining, and restricted ledger access provides sufficient entropy without per-record nonce generation. The nonce remains available as an optional additional protection measure.

**Merkle root:** A single mathematical fingerprint that summarizes an entire batch of audit records. It uses a tree structure: pairs of record fingerprints are combined and fingerprinted again, and those results are combined and fingerprinted again, until a single value remains at the top. If any single record in the batch is altered, the Merkle root changes. This is the compact summary that gets sent to the public blockchain.

**Public blockchain:** A decentralized, globally distributed ledger that no single party controls. Once data is written to it, it cannot be altered or deleted. The invention writes ONLY the Merkle root (a mathematical fingerprint) to the blockchain never any operational data, never any personal information. The blockchain serves as an independent, neutral timestamp proving that the audit log existed in a specific state at a specific moment. Implementations: Ethereum mainnet, Polygon PoS, or any compatible network.

**Anchoring agent:** The software component that computes the Merkle root from a batch of audit records and submits it to the public blockchain. It runs on a schedule (for example, daily). When the internet is down, it stores the pending submission locally and sends it when connectivity returns.

**Airlock ingestion engine:** The security checkpoint that every incoming external message must pass through before it can affect the facility's state. The airlock performs multiple checks in sequence: identity verification, duplicate detection, ordering validation, and content reasonableness assessment. Only messages that pass ALL checks are allowed to change facility state.

**Idempotency:** The property that ensures processing the same message twice produces the same result as processing it once. If a booking confirmation arrives twice (common during internet reconnection), only the first one is applied. The second is recognized as a duplicate and rejected. The system achieves this by creating a unique fingerprint (local event identifier) for each message and checking it against a log of already-processed fingerprints.

**Local event identifier:** The unique fingerprint created for each incoming message, derived from at least: (a) which external system sent it (source system identifier), (b) the external record's own ID or transaction ID, and optionally (c) a version number or revision sequence. This composite fingerprint is what enables duplicate detection.

**State-change magnitude validation:** A safety check performed on incoming messages AFTER they pass identity and duplicate checks but BEFORE they change facility state. The system calculates how much the message would change the current state. If the change is abnormally large for example, setting all prices to zero, or cancelling all reservations for the next month the message is held in quarantine for human review instead of being applied automatically. The thresholds are configurable per data category (pricing, inventory, scheduling, access permissions) and per measurement type (absolute change, percentage change, rate of change over time).

**Vault update verification engine:** The security gate specifically for software updates. Every update package must contain a digital signature created by the authorized issuer. The vault verifies this signature using a key that is sealed inside the hardware root of trust and performs the verification inside the isolated execution environment. If the signature is missing, invalid, or the update components don't match their declared fingerprints, the update is rejected entirely. No unauthorized code can ever execute on the system.

**Data egress policy engine:** The software gatekeeper for ALL outbound data. It classifies every piece of information trying to leave the building and enforces rules: authorized operational messages (rates, availability, inventory) can go to distribution partners; personal information cannot be bulk-exported; operational data and audit log contents cannot be sent to the solution provider. The solution provider ONLY receives device health status and update delivery status.

**Hardware-enforced outbound data filter:** A PHYSICAL component apart from the software positioned between the edge appliance's processing hardware and the internet connection. Its filtering rules are burned into non-modifiable memory (firmware, a programmable gate array, or a dedicated chip). These rules cannot be changed by any software running on the edge appliance, not even by an attacker with full operating system access. This provides a physical guarantee, on top of the software guarantee, that certain data categories can never leave the building to reach the solution provider. This addresses a real vulnerability: software-only protection can be bypassed by privilege escalation attacks.

**AI decision audit record:** A structured log entry created every time the system's AI makes or recommends a decision. It captures: (a) which AI model was used (model identifier), (b) what data went in (input features with personal information stripped out and replaced with anonymized equivalents), (c) what the AI recommended (output decision), (d) how confident the AI was (confidence score a number between 0 and 1), (e) whether a human accepted, modified, or rejected the recommendation (human override indicator), and (f) the exact time. This record goes into the same audit log, gets the same hash chaining, Merkle root computation, and blockchain anchoring as everything else.

**Data retention policy:** A configurable rule that specifies how long a specific category of data can be stored. Examples: "guest identity scans: delete 24 hours after checkout," "patient diagnostic images: retain 10 years after treatment," "customer credit files: retain 5 years after account closure." The system enforces these rules automatically no human needs to remember to delete anything.

**Proof of destruction record:** When data is destroyed per a retention policy, the system creates mathematical evidence that the data is gone. This evidence includes: what category of data was deleted, which retention policy triggered it, exactly when the destruction happened, and a cryptographic attestation (a mathematical verification computed over the storage area after destruction) proving the data is no longer retrievable. This proof is then written to the audit log and anchored to the blockchain creating permanent, publicly verifiable evidence that data was lawfully destroyed.

**Device command interface:** The component that controls physical devices connected to the facility's local network. It generates digital access credentials (keys), transmits them to devices (locks, climate controllers, sensors, autonomous robots), revokes credentials, and issues operational commands (temperature setpoints, lighting levels, sensor configurations). ALL of this works without internet. The communication uses MQTT (a lightweight device-to-device messaging protocol) or equivalent local messaging methods.

**Ephemeral access credential:** A short-lived digital key generated for autonomous mobile systems (delivery robots, cleaning robots, logistics carts). Unlike persistent credentials for fixed devices (door locks get a credential that lasts until revoked), ephemeral credentials have a built-in countdown timer (time-to-live). When the timer expires, the credential stops working automatically no revocation command needed. They can also include spatial zone restrictions (the robot is only authorized to enter specific corridors, floors, or areas).

**Federated model weight update:** When multiple facilities each train their own AI models locally on their own data, the mathematical improvements (numerical vectors called gradients NOT raw data, NOT personal information) can be shared between facilities to make everyone's AI smarter. A facility in Marrakech learns that Wednesday OTA bookings convert better at a certain price point. The mathematical improvement is shared. A facility in Istanbul benefits from that learning without ever seeing a single Marrakech guest's data.

**Statistical divergence metric:** A mathematical measurement of how different an incoming model weight update is from the current local model. If a facility sends an update that is wildly different from what every other facility has learned, it might be corrupted or intentionally poisoned. The divergence metric catches this.

**Initial installation attestation protocol:** When a new edge appliance arrives at a facility and is powered on for the first time, it must PROVE it has not been tampered with during shipping. The hardware root of trust generates an attestation report containing: its manufacturer identity certificate, measurements of every software component loaded during startup, and a fresh random challenge from the facility operator. This report is sent to a verification authority. Only if the verification passes confirming the device is genuine and uncompromised is the device allowed to join the operational cluster and start processing data.

**Post-quantum cryptographic algorithms:** Mathematical methods for digital signatures and encryption designed to resist attacks from quantum computers. Current algorithms (RSA, ECC) will eventually be broken by sufficiently powerful quantum computers. New algorithms standardized by the US National Institute of Standards and Technology in 2024 ML-DSA (FIPS 204) for signatures, ML-KEM (FIPS 203) for key exchange, SLH-DSA (FIPS 205) for hash-based signatures use mathematical structures (lattices, hash trees) that quantum computers cannot efficiently attack. The TPM 2.0 specification was updated in July 2025 (version V185) to support these algorithms. Source: NIST, Trusted Computing Group.

**Platform configuration registers (PCR):** Secure measurement storage slots inside the hardware root of trust. During startup, the system measures (creates a fingerprint of) every software component that loads from firmware to boot loader to operating system. These measurements are stored in PCRs. If any component has been tampered with, the measurements will be different from what is expected, and the attestation verification will fail.

**Endorsement Key (EK) certificate:** A digital identity document embedded in the hardware root of trust chip during manufacturing. It proves: (a) which manufacturer made the chip, (b) that the chip is genuine, and (c) that it chains back to the manufacturer's root certificate authority. This is how the facility operator knows the security chip hasn't been replaced with a counterfeit.

## Claims

1. A computer system for controlling outbound transmission of data from a facility, the computer system comprising:
a. a physical computing device configured to execute operational software locally within the facility,
b. a first control layer comprising a software-implemented data egress control module configured to classify outbound data generated by, or accessible to, the physical computing device and to determine, by applying one or more transmission rules, a transmission permission status for the outbound data, and
c. a second control layer comprising a hardware outbound filter arranged in a communication path between the physical computing device and a wide area network
wherein:
- the first control layer is configured to determine outbound data to be permitted for transmission, and
- the second control layer is configured to filter outbound data determined by the first control layer to be permitted for transmission prior to transmission to the external network,
- the second control layer is configured to only permit transmission of outbound data matching a predefined whitelist, and
- the second control layer is further configured to block or discard outbound data that does not match the predefined whitelist, and wherein the predefined whitelist is stored in a form non modifiable by a software executed on the physical computing device.

2. The computer system according to claim 1, wherein the plurality of data categories comprises:
- authorized operational data permitted for transmission,
- personal data prevented to bulk export, and
- data directed to a solution provider system not permitted for transmission.

3. The computer system according to claim 1, wherein the predefined whitelist permits transmission to the solution provider system only of outbound data comprising device-health telemetry and update-delivery status data.

4. The computer system according to any of the previous claims, wherein the second control layer is configured to block or discard outbound data not matching the predefined whitelist independently of the output of the first control layer.

5. The computer system according to any of the previous claims, wherein the predefined whitelist is stored in firmware of the hardware outbound filter.

6. The computer system according to any one of the previous claims, further comprising a data destruction engine configured to irreversibly destroy data stored in a storage region and to generate a proof of destruction record comprising a cryptographic attestation computed over the storage region after destruction of the data, the cryptographic attestation providing mathematical evidence that the data is no longer retrievable from the storage region.

7. The computer system according to any of the previous claim, further comprising an airlock ingestion engine configured to receive incoming data from one or more external systems and to subject said incoming data to a plurality of sequential validation steps before permitting the incoming data to modify a facility state maintained by the physical computing device, the validation steps comprising:
a) an identity check configured to verify, over an encrypted connection, that a sender of the incoming data holds valid credentials for a claimed external system, wherein unverified incoming data is rejected and logged,
b) a duplicate detection check configured to generate a local event identifier for each incoming message by combining at least a source system identifier and an external record identifier, and to compare said local event identifier against a stored set of previously processed identifiers, wherein a matching identifier causes the incoming message to be rejected as a duplicate and logged,
c) an ordering check configured to determine, using version numbers associated with incoming messages relating to a same record, a correct processing order, and to suppress messages with equal version numbers and flag messages with lower version numbers for operator review, and
d) a content reasonableness check configured to compute a magnitude of a state change represented by the incoming message and to compare said magnitude against a configurable threshold for a corresponding data category, wherein, if the magnitude exceeds the threshold, the incoming message is quarantined and not applied to the facility state until a human operator issues an approval or a rejection decision, said decision being logged.

8. The computer system according to any of the previous claim, further comprising a vault subsystem configured to verify software updates before permitting said software updates to modify software executed on the physical computing device, wherein:
- each software update comprises a manifest, a cryptographic fingerprint for each component listed in the manifest, and a digital signature over the manifest,
- a verification key for verifying the digital signature is sealed inside a hardware root of trust chip such that said verification key is encrypted with a key that only said specific hardware root of trust chip can decrypt; and
- a signature verification process is executed within an isolated execution environment, TEE, of the physical computing device such that an attacker with root-level access to the operating system of the physical computing device cannot observe the verification process, extract the verification key, or forge a valid signature.

9. The computer system according to any of the claims 1 to 8, further comprising a local audit log configured to record events, said the local audit log is configured to record events generated by each computer subsystem of the computer system, each record comprising an event type, event details, and a timestamp, and wherein each record comprises a cryptographic fingerprint derived from a preceding record such that modification of any record produces a detectable mismatch in all subsequent records.

10. The computer system according to claim 9, wherein individual records of the local audit log are signed by the hardware root of trust chip, providing device-specific proof that each record originated from said specific physical computing device at a specific time.

11. The computer system according to Claim 9 or 10, further comprising a blockchain anchoring agent configured to:
- compute, on a configurable schedule, a Merkle root over a batch of audit records committed during a defined period, the Merkle root being a single cryptographic fingerprint representative of the entire batch,
- submit only the Merkle root to a public blockchain network, wherein no operational data, no personal data, no record contents, and no facility identifiers are written to the blockchain; and
- store pending submissions locally when internet connectivity is unavailable and transmit said pending submissions when connectivity is restored.

12. The computer system according to any of the previous claims, further comprising a device commander subsystem configured to generate, transmit, and revoke access credentials for physical devices connected to a local area network of the facility, and to issue operational commands to said physical devices, without requiring wide-area network connectivity, wherein the device commander is configured to generate:
- persistent credentials for fixed devices, said persistent credentials remaining valid until explicitly revoked by a revocation command, and
- ephemeral credentials for autonomous mobile systems, said ephemeral credentials having a predefined time-to-live such that each ephemeral credential automatically becomes invalid upon expiry of the predefined time-to-live without requiring a revocation command.

13. The computer system according to any of Claims 9 to 12, further comprising an AI accountability engine configured to generate, for each AI decision or recommendation produced by an AI system associated with the facility, an AI decision audit record comprising:
a) a model identifier indicating which AI model or algorithm produced the decision,
b) input features provided to the AI model, wherein personal data is removed and replaced with anonymised equivalents before recording,
c) an output decision indicating the recommendation produced by the AI model,
d) a confidence score indicating a degree of certainty of the AI model in the output decision,
e) a human override indicator indicating whether a human accepted, modified, or rejected the AI recommendation, and
(f) a timestamp,
wherein the AI decision audit record is recorded in the local audit log, hash-chained, included in a Merkle root computation, and anchored to the public blockchain.

14. The computer system according to any of the previous claim, further comprising a trust verification subsystem configured to verify, upon first activation of the physical computing device at the facility, that the physical computing device has not been tampered with during shipping, by:
- generating, by the hardware root of trust chip, an attestation report comprising an endorsement key certificate proving that the chip originates from a known manufacturer, platform configuration register values corresponding to measurements of software components loaded during startup, and a freshness proof comprising a random challenge provided by a facility operator; and
- transmitting said attestation report to a verification authority configured to confirm that the endorsement key certificate chains to a manufacturer root certificate, that the platform configuration register values match expected values for an untampered device, and that the freshness proof is current,
wherein the physical computing device is not permitted to process facility data until said verification passes.

15. A computer-implemented method for controlling outbound transmission of data from a facility and maintaining a tamper-evident operational record, the method comprising:
- executing operational software locally on a physical computing device installed within the facility,
- classifying, by a software-implemented data egress control module, outbound data generated by the physical computing device and determining a transmission permission status for the outbound data by applying one or more transmission rules,
- filtering, by a hardware outbound filter arranged in a communication path between the physical computing device and an external network, outbound data determined by the software-implemented data egress control module to be permitted for transmission, the hardware outbound filter permitting transmission only of outbound data matching a predefined whitelist stored in a form not modifiable by software executed on the physical computing device,
- recording, in an append-only local audit log, events generated by the physical computing device, wherein each record comprises a cryptographic fingerprint derived from a preceding record,
- computing, on a configurable schedule, a Merkle root over a batch of audit records and submitting only the Merkle root to a public blockchain network, wherein no operational data or personal data is written to the blockchain.
